# EUROPEAN PATENT APPLICATION

(11) **EP 2 112 605 A1**
(43) Date of publication of application: **28.10.2009**
(21) Application number: 09100233.7
(22) Date of filing: 10.04.2009
(51) Int. Cl.: G06F 17/30

(54) **Universal content catalog**

(30) Priority: 21.04.2008 US 148575
(71) Applicant: WMode Inc., Calgary, Alberta T2L 2K7 (CA)
(72) Inventor: Mullen, Tom, Calgary, Alberta (CA)
(74) Representative: Hellmich, Wolfgang

(57) **Abstract**

A content catalog suitable for electronic distribution of digital media to interactive media services devices such as cellular phones, digital cameras, television, and printers over the internet. The content catalog includes digital media sourced from online catalog and different content providers. The content catalog also includes metadata associated with the digital media, as well as commercial agreements such as revenue sharing, and payment contracts associated with the distribution of the digital media. The digital media in the content catalog are validated and stored in an electronic database.

## Description

### BACKGROUND OF THE INVENTION

The invention relates generally to digital media distribution over the Internet. More particularly, the invention relates to a content catalog for storing different types of the digital media.

In the present age of the Internet, digital media such as ringtones, software applications, software updates, plug-ins, advertisements, banners, video files, audio files etc. are desired by users using interactive media services devices such as cellular phones and digital cameras. The digital media can be downloaded by the user from an online content catalog or from a website of a content provider. The user may access the digital media directly or through a service provider such as a cellular communication service provider. For example, the user may send a request to download a ringtone via Short Messaging Service (SMS) to the communication service provider. The communication service provider, in turn, forwards this request to one of the content providers and the content provider then provides the ringtone to the user.

In the existing methodology, different types of the digital media and information associated with the digital media are not consolidated. The user or the communication service provider needs to access different content providers or online catalogs for providing different digital media desired by the user. This makes the process time consuming and cumbersome for the user. Further, the communication service provider needs to sign agreements such as revenue sharing and payment terms related to distribution of the digital media. The service provider also needs to check the validity of the digital media provided by the content provider. For example, the digital media should be virus free and constitute the latest version of the digital media.

In light of the foregoing discussion, there is a need for a method and system which provides a consolidated database of different types of digital media and also includes information related to commercial agreements associated with the digital media to facilitate the distribution of the digital media to a user over the Internet.

### SUMMARY

An object of the invention is to provide a database independent of content providers.

Another object of the invention is to facilitate the business and transactions between the users and merchants providing digital media.

Yet another object of the invention is to provide digital media desired by a user efficiently.

To achieve the above mentioned objectives, the invention provides a method and system to create a content catalog of digital media that may be delivered over the Internet to a user having an interactive media services device. The method includes sourcing different types of digital media from online catalogs and different content providers, and recording metadata such as type of the digital media and price information associated with the digital media. The method further includes obtaining information related to commercial agreements associated with the digital media and with the content provider. The commercial agreements include revenue model, payment terms, and the like. The digital media and the metadata, along with the commercial agreement information, is validated, formatted and stored in an electronic database.

In another exemplary embodiment of the invention, the invention provides a system for managing media and information related to the media to be delivered over the Internet to a user via an interactive media services device. The system includes a sourcing module, a metadata module, a contracts engagement module and a storage module. The sourcing module obtains the media from a plurality of content providers and online catalogs. The metadata module records and manages the metadata information associated with the media. The contracts management module stores commercial agreements associated with the media and with the content providers. Further, the storage module stores the media, the associated metadata and commercial agreements. The system also includes a means for categorizing the media based on the type of media, the type of commercial agreements, the types of the interactive media services devices and so forth. The system facilitates better maintenance of the media and distribution of the media to the users.

### BRIEF DESCRIPTION OF THE DRAWINGS

The preferred embodiments of the invention will hereinafter be described in conjunction with the appended drawings provided to illustrate and not to limit the invention, wherein like designations denote like elements, and in which:
FIG. 1 is a block diagram of a content catalog in accordance with various embodiments of the invention;
FIG. 2 is a flow chart illustrating a method for creating a content catalog in accordance with an embodiment of the invention; and
FIG. 3 is a flow chart illustrating a method for creating a content catalog in accordance with another embodiment of the invention.

### DETAILED DESCRIPTION OF THE INVENTION

Various embodiments of the invention provide a content catalog of various types of digital media that may be delivered to a user through an interactive media services device such as a cellular phone, a digital camera, telematics system, a printer, navigation devices, home appliances and the like. The content catalog includes the digital media from different content providers and online catalogs. The content catalog also stores information related to commercial agreements associated with the digital media and with the content providers. Further, the information is stored in a predefined format which facilitates transmission and tracking of the digital media that is delivered to the user.

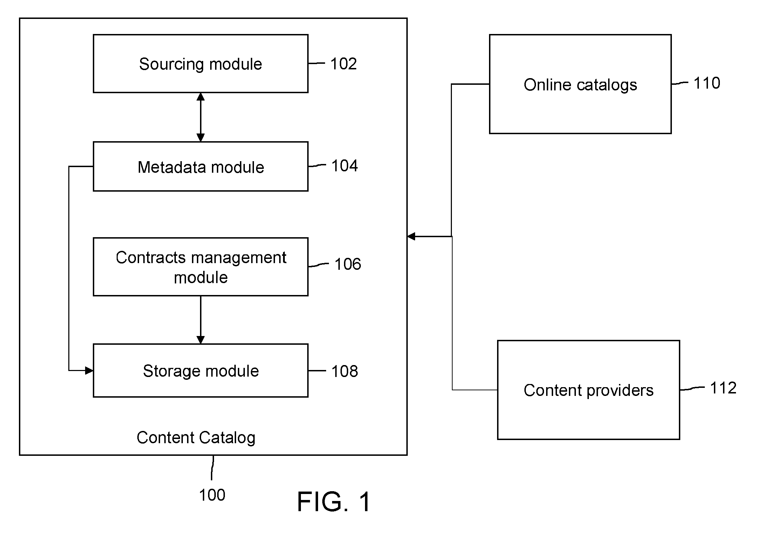

FIG. 1 is a block diagram of a content catalog 100 in accordance with various embodiments of the invention. Content catalog 100 includes a sourcing module 102, a metadata module 104, a contracts management module 106 and a storage module 108.

Sourcing module 102 extracts digital media and details related to the digital media from online catalogs 110 and content providers 112. Examples of the digital media include but are not limited to ringtones, games, image files, software applications, banners, advertisement applications, pop-ups, plug-ins, web services, and telephony services. Metadata module 104 records details related to the digital media extracted by sourcing module 102. Details related to the digital media includes type of the digital media, version of the digital media and the like. Contracts agreement module 106 identifies commercial agreements associated with the distribution of the digital media and with the content providers. The commercial agreements include, for example, agreements related to revenue sharing between the content provider and a mobile service provider or manufacturer of the interactive media services device. Storing module 108 stores the digital media, the metadata associated with the digital media, and the commercial agreements. Further, storing module 108 validates and formats the digital media, the metadata, and the commercial agreements according to a predefined format. Herein, validation includes checking the commercial agreements and digital media from a compliance and regulatory perspective. In one embodiment of the invention, storing module 108 is a Microsoft SQL database and, accordingly, the digital media, the metadata and the commercial agreements are stored in a tabular format.

In various embodiments of the invention, metadata module 104 also records information related to the interactive media services devices having access to the content catalog. Accordingly, storing module 108 formats and categorizes the media, metadata associated with media, and the commercial agreements based on the type of the interactive media services device. In one embodiment of the invention, the categorization may also be based on user profile information. Examples of the interactive media services devices include, but are not limited to, a cellular phone, a digital camera, a television, home appliances such as washing machine and microwave oven, navigation systems, personal video recorders, and a printer. Accordingly, for example, software packages related to digital cameras will be grouped and sent to camera devices only. The categorized digital media is referred to as storefronts. In one embodiment of the invention, multiple storefronts can be delivered to one interactive media services device.

In various embodiments of the invention, a digital media requested by a user is extracted from storing module 108 and transferred on to the interactive media services device of the user via the Internet.

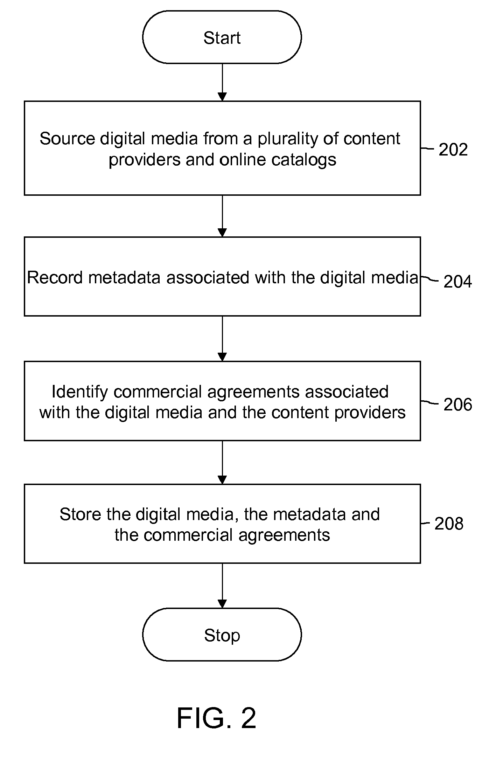

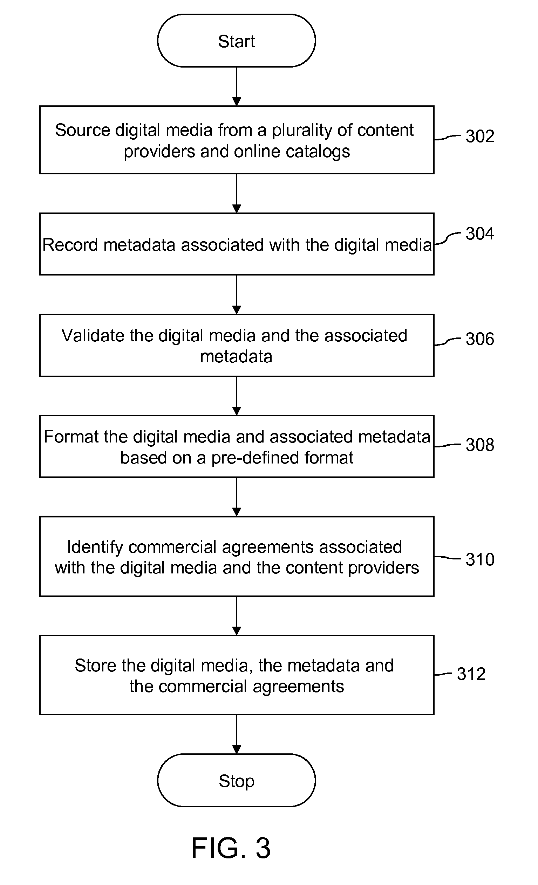

In various embodiments of the invention, the above mentioned modules may be implemented as software modules, hardware modules, a firmware and a combination thereof. The functions of these modules is explained in detail in conjunction with FIG. 2 and FIG. 3

FIG. 2 is a flowchart illustrating a method for creating a content catalog such as content catalog 100 in accordance with an embodiment of the invention. At step 202, digital media which may be distributed over the Internet to different types of interactive media services devices is sourced from online catalogs and/or various content providers. Examples of the digital media include ringtones, image files, software applications, web services, wallpapers, program applications, music files, video files, and the like. Sourcing includes transfer of the digital media from the online catalogs and the content providers. In other words, a copy of the digital media is obtained from the online content catalogs and other providers. At step 204, information related to the digital media referred to as metadata is also obtained. The metadata includes, for example, data such as type of the digital media, size of the digital media, configuration required to install the digital media on the interactive media services device and the like.

Thereafter, at step 206, details related to commercial agreements associated with distribution of the digital media are identified and recorded. The commercial agreements include revenue sharing agreements, pricing agreements, payment terms and the like. The commercial agreements may also include agreements and policies related to transfer of the digital media over the Internet to the interactive media services devices. The commercial agreements are signed between the content providers and the provider of the content catalog. Alternatively, the agreements are signed between the content providers and the Internet service providers. This information is obtained when a digital media is purchased or licensed from the content provider or when the Internet service provider signs up with the content catalog provider. At step 208, the digital media, the metadata and the commercial agreements are stored by using a predefined format. The digital media may be categorized/ grouped together based on, for example, the type of media and the type of device to which the media may be delivered. For example, the digital media associated with digital cameras may be grouped together. This digital media may then be further grouped as, for example, software application related to image enhancement, plug-ins for slide shows and the like. Desired digital media is then extracted from the stored digital media and is delivered to a user. The details related to storage and formatting of the media and related information is explained in detail in conjunction with FIG. 3

FIG. 3 is a flowchart illustrating a method for creating a content catalog in accordance with another embodiment of the invention. At step 302, the digital media which may be distributed over the Internet to different types of interactive media services devices is sourced from online catalogs and/or various content providers. At step 304, information related to the digital media referred to as metadata is also obtained. The metadata includes, for example, data such as type of the digital media, size of the digital media, configuration required to install the digital media on the interactive media services devices and the like. In addition, information related to the type of interactive media services devices is also obtained. For example, different types of cellular phones, digital cameras, televisions and their configurations are recorded. Thereafter, at step 306, the digital media and the metadata are validated. For example, the digital media is checked to see if the version of the digital media is the latest version or if the digital media is corrupt or virus affected.

Thereafter, at step 308, the digital media and the metadata associated with the digital media are formatted based on a predefined format. For example, the digital media which may be delivered or related to digital cameras can be categorized/grouped together and can be further grouped into sub categories based on the different types of digital cameras. At step 310, commercial agreements associated with the digital media and the content providers are identified and recorded. The commercial agreements may also include agreements and policies related to transfer of the digital media over the Internet to the interactive media services devices. At step 312, the digital media, the metadata and the commercial agreements are stored. In an embodiment of the invention, the digital media, the metadata and the commercial agreements are stored in a Microsoft SQL database.

The content catalog as described above facilitates distribution of the digital media over the Internet to interactive media services devices. Further, categorization of the digital media based on device specific capabilities and the type of the digital media helps the user choose the desired digital media. In addition, this also eliminates the time and resource intensive tasks linked to content selection and negotiation. This is because all the digital media are present at one location along with details related to pricing, etc.

The system and method for creating a content catalog of the digital media to be delivered to a user over the Internet, as described in the present invention or any of its components, may be embodied in the form of a computer system. Typical examples of a computer system include a general-purpose computer, a programmed microprocessor, a micro-controller, a peripheral integrated circuit element, and other devices or arrangements of devices that are capable of implementing the steps that constitute the method of the present invention.

The computer system comprises a computer, an input device, a display unit and the Internet. The computer further comprises a microprocessor. The microprocessor is connected to a communication bus. The computer also includes a memory. The memory may include Random Access Memory (RAM) and Read Only Memory (ROM). The computer system further comprises a storage device. The storage device can be a hard disk drive or a removable storage drive such as a floppy disk drive, optical disk drive, etc. The storage device can also be other similar means for loading computer programs or other instructions into the computer system. The computer system also includes a communication unit. The communication unit allows the computer to connect to other databases and the Internet through an I/O interface. The communication unit allows the transfer as well as reception of data from other databases. The communication unit may include a modem, an Ethernet card, or any similar device, which enables the computer system to connect to databases and networks such as LAN, MAN, WAN and the Internet. The computer system facilitates inputs from a user through the input device, accessible to the system through the I/O interface.

The computer system executes a set of instructions that are stored in one or more storage elements in order to process input data. The storage elements may also hold data or other information as desired. The storage element may be in the form of an information source or a physical memory element present in the processing machine.

The set of instructions may include various commands that instruct the processing machine to perform specific tasks such as the steps that constitute the method of the present invention. The set of instructions may be in the form of a software program. Further, the software may be in the form of a collection of separate programs, a program module with a larger program or a portion of a program module, as in the present invention. The software may also include modular programming in the form of object-oriented programming. The processing of input data by the processing machine may be in response to user commands, results of previous processing or a request made by another processing machine.

## Claims

1. A method for creating a content catalog suitable for delivering digital media to a user via an interactive media services device, the method comprising:
a. sourcing the digital media from at least one source selected from a plurality of content providers and online catalogs;
b. recording metadata associated with the digital media;
c. identifying commercial agreements associated with the digital media and the content providers; and
d. storing the digital media, the metadata, and the commercial agreements.

2. The method according to claim 1 wherein the digital media is delivered to the interactive media services device over the Internet.

3. The method according to claim 1 or 2 wherein the commercial agreements comprise at least one of revenue sharing agreement, pricing agreement, and payment terms.

4. The method according to one of the preceding claims further comprising recording details related to the capability of the interactive media services device receiving the digital media.

5. The method according to one of the preceding claims wherein the digital media comprises at least one of ringtones, games, image files, wallpapers, applications, advertisements, banners, video files, audio files, and pop-ups.

6. The method according to one of the preceding claims further comprising formatting the digital media and associated metadata based on a pre-defined format.

7. The method according to one of the preceding claims further comprising validating the digital media and associated metadata.

8. The method according to one of the preceding claims further comprising categorizing the digital media into one or more storefronts based on the metadata and the type of interactive media services device to which the media is delivered.

9. A system for managing digital media and information related to the digital media, the digital media to be delivered to a user via an interactive media services device, the system comprising:
a. a sourcing module, the sourcing module obtaining digital media from at least one source selected from a plurality of content providers and online catalogs;
b. a metadata module, the metadata module managing metadata information associated with the digital media;
c. a contracts management module, the contracts management module storing commercial agreements associated with the digital media and the content providers; and
d. a storage module, the storage module storing the digital media, the associated metadata and commercial agreements.

10. The system according to claim 9 wherein the interactive media services device is at least one of a digital camera, a television, a printer, microwave oven, personal video recorder, and a telematics system.

11. The system according to claim 9 or 10 further comprising means for categorizing the stored digital media into one or more storefronts based on the metadata and the type of interactive media services device.

12. The system according to claim 9 to 11 wherein the digital media comprises at least one of ringtones, games, image files, advertisements, banners, audio files, video files and pop-ups.

13. A computer program product for use with a stored program computer, the computer program product comprising a computer usable medium having a computer readable program code embodied therein for creating a content catalog suitable for delivering digital media to a user via an interactive media services device, the computer readable program code performing the steps of:
a. sourcing the digital media from at least one source selected from a plurality of content providers and online catalogs;
b. recording metadata associated with the digital media;
c. identifying commercial agreements associated with the digital media and the content providers; and
d. storing the digital media, the metadata, and the commercial agreements.

14. The computer program product of claim 13 wherein the computer readable program code further comprises code for recording details related to the capability of the interactive media services device executing the media.

15. The computer program product of claim 13 or 14 wherein the digital media comprises at least one of ringtones, games, image files, advertisements, wallpapers, banners, video files, audio files, and pop-ups.
